# EUROPEAN PATENT SPECIFICATION

(11) **EP 3 260 291 B1**
(45) Date of publication and mention of the grant of the patent: **05.08.2020**
(21) Application number: 17177177.7
(22) Date of filing: 21.06.2017
(51) Int. Cl.: B32B 7/12, B32B 27/08, B32B 27/18, B32B 27/20, B32B 27/30, B32B 27/32, B32B 27/34

(54) **THIN FILM FOR WASTE PACKING CASSETTES**
DÜNNSCHICHT FÜR ABFALLVERPACKUNGSKASSETTEN
FILM MINCE POUR CASSETTES DE CONDITIONNEMENT DE DÉCHETS

(30) Priority: 22.06.2016 EP 16175766
(43) Date of publication of application: 27.12.2017
(73) Proprietor: Flexopack S.A., 194 00 Koropi (GR)
(72) Inventor: Gkinosatis, Dimitris, 19400 Koropi Attica (GR)
(74) Representative: Isarpatent

(56) References cited:
- EP-A1- 2 332 723
- EP-A1- 2 824 038
- WO-A1-2015/100211
- WO-A1-2015/116965
- US-A1- 2012 231 188
- US-A1- 2013 019 568
- US-A1- 2013 209 797
- US-A1- 2015 210 454

## Description

The present invention refers to the use of a polymeric film comprising an odor barrier material for storing malodorous waste.

A lot of waste products produce smells that are annoying to the environment. Examples are decayed food, kid nappies and cat litter.

In the prior art there are many films that could be used for protection from malodors. As well known in the art, the use of materials like EVOH, PVDC, polyacrylonitrile is recommended in order to not allow malodors to escape from the container (e.g. bag or other configuration) and create an unpleasant atmosphere.

There are also a lot of known configurations of packing a certain length of film (e.g. 20 meters) in a compressed form (e.g. in a cassette). Examples of the representative cassettes are shown in US 4,934,529 or US 3,356,192.

Generally the cassette comprises a tubular core, casing wall and cassette bottom. The film is pulled through the area between the lid of the cassette and the casing wall. The flexible tubing is dispensed from the cassette. After the malodorous item (e.g. diaper) is thrown into the bag the core is rotated and the flexible tube is twisted so that it closes as hermetically as possible the waste/environment area.

To dispose the next diaper the user pushes the next portion of film. The previous hermetically closed diaper is pushed downwards and the new diaper is packed in a new configuration. All these different packs are stored in a bin which is periodically emptied.

Separation of one pack to the other can be done by various means. A rotary knife is preferred.

In the prior art a lot of possible film configurations either monolayer or multilayer have been proposed. The basic characteristics a film should have in order to be used in the particular case are
1. Barrier to odours.
2. To have the proper deadfold properties (non resilient) so that is compressed efficiently in the cassette.
3. To have sufficient mechanical properties (e.g. tensile strength at break, elongation).

We have surprisingly found that all these features can be achieved with a very lightweight multilayer film with grammage less than 25 grs/square meter where the film comprises a lamellar type filler.

The general technical background of the invention also includes US 2013/209797 A1.

A market requirement of this market is the maximum compressibility of the film, meaning that in the same cassette a maximum length of the film should be storable. We have surprisingly found that the use of lamellar fillers improves this point versus the prior art spherical or irregular shape fillers.

### SUMMARY OF THE INVENTION

The invention is directed to the use of a multilayer film for storing malodorous waste as indicated in the appending claims.

The films according to the invention show superior results regarding compressibility characteristics. Furthermore, the films according to the invention are superior in odor testing compared to commercially available films.

### Definitions:

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured in water according to ASTM 2732. For temperatures like 100°C or more, glycerin is used as a reference liquid.

The term "total heat shrinkability" refers to the sum of heat shrinkability at the MD direction and heat shrinkability at the TD direction. In all cases, ASTM 2732 is used for measurement of shrinkability.

The term "multilayer" refers to a film comprising 2 or more layers.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein, the term "polyolefin" refers to any polymerized olefin, which can be linear, branched, cyclic, aliphatic, substituted or unsubstituted. More specifically, included in the term polyolefin are homopolymers of olefin, copolymers of olefin, copolymers of an olefin and a non olefinic comonomer (such as ester) etc.

Specific examples include polyethylene homopolymer, polypropylene homopolymer, polybutene homopolymer, ethylene alpha olefin copolymer, propylene alpha olefin copolymer, butene alpha olefin copolymer, ionomer, ethylene ester copolymer etc.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The methacrylate content is less than 40 % per weight based on the total content of the ethylene methacrylate copolymer.

As used herein the phrase "ethylene vinyl acetate copolymer" or EVA refer to copolymers of ethylene and vinyl acetate.

As used herein the phrase "ethylene ester copolymer" includes any polymer made from ethylene and ester monomers. It is obvious that this term includes EVAs, EMAs and other polymers.

As used herein the term "oxygen barrier polymer" refers to polymers which have the property to limit the passage of oxygen through a film or a layer comprising the polymer. Common materials are EVOH, PVDC or polyamide.

As used herein, the term EVOH refers to saponified products of ethylene vinyl ester copolymers. The ethylene content is typically in the range of 25 to 50% per mole. All the later references to EVOH ethylene content will be in % per mole.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized. An example of such material is Surlyn from Dupont.

As used herein, the term "polypropylene" refers to polymers incorporating propylene structural units. Examples of these, are homo polypropylenes, random copolymers of propylene and ethylene, block copolymers of propylene and ethylene, copolymers or blends of propylene and rubber(such as blends of polypropylene and ethylene propylene rubber), propylene ethylene alpha olefin terpolymers and others.

These polymers may be isotactic, syndiotactic or atactic. Isotactic configuration is preferred.

As used herein the term "substantially non resilient material" refers to materials or material compounds comprising at least 40% per weight inorganics like calcium carbonate, titanium dioxide, wollastonite, mica, glass fibers, dolomite and the like. The rest percentage per weight can be polyethylene, polypropylene, styrene polymer or other thermoplastic material.

As used herein the term "filler" refers to the inorganic part of the substantially resilient material.

As used herein the term "lamellar filler" refers to fillers with lamellar shaped particles. Typical examples are talc, mica and certain clays.

All measurement methods mentioned herein are readily available for the skilled person. For example, they can be obtained from the American National Standards Institute at: www.webstore.ansi.org

All percentages are based on weight per weight ratio, except when otherwise stated.

The grs/square meter is same as g/m², expressing the weight to surface ratio.

### DETAILED DESCRIPTION OF THE INVENTION

According to an aspect the present invention is directed to the use of a multilayer film with a weight of less than 20g/m² in malodorous item packaging, where the film comprises a layer comprising a polyolefin and a layer comprising a lamellar filler.

In a preferred embodiment, the multilayer film has a weight of less than 15 g/m².

In a further preferred embodiment, the polyolefin is an ethylene alpha olefin copolymer. In a further preferred embodiment, the ethylene alpha olefin copolymer is an ethylene hexene or ethylene octene copolymer.

In a further preferred embodiment, the film comprises the construction:
OUTER LAYER / ABUSE LAYER / INTERMEDIATE LAYER / BARRIER LAYER / INTERMEDIATE LAYER / ABUSE LAYER / INNER LAYER

In another preferred embodiment, the film comprises the construction:
OUTER LAYER / INTERMEDIATE LAYER / BARRIER LAYER / INTERMEDIATE LAYER / INNER LAYER

The presence of the barrier layer is mandatory only in cases where a superb odour barrier is needed. In other cases, the construction of the film can be like
OUTER LAYER / INTERMEDIATE LAYER1 / INTERMEDIATE LAYER2 LAYER / INTERMEDIATE LAYER3 / INNER LAYER

### Detailed description of layers:

### Barrier layer

In a preferred embodiment of the invention, the oxygen barrier material is EVOH. The EVOH used preferably has an ethylene content of less than 48% per mole, more preferably less than 44% per mole, even more preferably less than 38% per mole, most preferably from 27 to 32% per mole.

In another preferred embodiment, the oxygen barrier material comprises polyamide.

The oxygen barrier material preferably has a weight of less than 3 g/m², more preferably less than 2 g/m² and even more preferably less than 1.5 g/m².

### Outer layer

In a further preferred embodiment, the weight of the outer layer is less than 6 g/m², more preferably less than 5 g/m².

In a further preferred embodiment, the polypropylene is a copolymer or a blend of different monomers or polymeric structures. This blending may take place during polymerization or as a later stage.

In another possible embodiment, the outer layer comprises a polyolefin, such as low density polyethylene, ethylene alpha olefin copolymer, high density or ethylene ester copolymer, such as EVA.

### Inner layer

Preferred materials for the inner layer include polyolefins, such as low density polyethylene, high density polyethylene, ethylene ester copolymer, ethylene alpha olefin copolymer and polypropylene. Ionomers and styrene copolymers are also possible. Ethylene alpha olefin copolymer is particularly preferred.

According to a further embodiment, the present invention is of the same configuration where inner layer comprises a "substantially non resilient material" (SNR).

In a preferred version of the invention, the SNR material is at least 10 percent, preferably at least 20, preferably at least 30 percent per weight of the inner layer.

### Intermediate layers

In the intermediate layers, also called adjacent layers, typical adhesive resins like maleic anhydrite modified polyolefins may be used. Typical examples are BYNEL from Dupont and OREVAC from Arkema.

In another preferred version of the invention, polyamide could be used as intermediate layer.

If barrier polymers like EVOH, polyamide, PVDC or polyester are not used, the intermediate materials can be polyolfins, preferably polypropylene or ethylene alpha olefin copolymer.

The lamellar filler can be blended in inner, outer and/or intermediate layers. It can preferably be in the form of masterbatch/compound.

The percentage of the lamellar filler in the whole film can be in the range of 1-50% per weight, preferably 10-40% per weight.

### General

Additives well known in the art may be used in one or more layers of the present invention. Slip additives, antiblock additives, antifog, polymer processing aids may be used if pertinent. Antimicrobial additives may also be used in one or more of the layers to inhibit the microbe formation. Preferably the antimicrobial is put on the side where the waste is in direct vicinity.

In order to increase the mechanical properties the film may be crosslinked with one of the following methods.

E-beam radiation, gamma radiation, moisture crosslinking using silane grafting compounds, peroxide crosslinking.

The film may be in tubular form or sealed at the edges or single sheet configuration. Centerfold configuration is also possible.

The preferred production method for the film is the hot blown film method, which is well known in the art. Other methods like extrusion through flat cast die are also possible.

### LAMELLAR FILLER

Preferably, the lamellar filler comprises silicate. More preferably it comprises at least one member selected from the group consisting of magnesium silicate and hydrated aluminum silicate.

In a further preferable version, the lamellar filler comprises talc, kaolin or mica.

Preferably the largest dimension of the filler is from 0.1 to 15 microns, more preferably 0.5 to 10 microns. The largest dimension herein is the largest value of the dimensions of the filler in space, e.g. chosen among maximum length, maximum thickness and maximum diameter, which can vary according to the shape of the filler. For example, in case of a spherical filler, the largest dimension can be the diameter, whereas in case of platelets it can be the largest of diameter and thickness, and in case of fibers it can be the largest of length and diameter. The determination of the lamellar dimensions can be done by methods known in the art.

Preferably the aspect ratio of the filler is at least 5. The aspect ratio herein is the ratio of the sizes of the filler in different dimensions. For example, the aspect ratio can be the ratio of length to diameter for a fiber, or the ratio of diameter to thickness for a platelet. The aspect ratio for an ideal sphere is unity.

### METHOD

The invention is also directed to a method of controlling malodorous waste by placing them inside a film according to the invention.

The film prior to packing the malodorous waste is packed inside a cassette as per prior art.

### EXAMPLES

Three similar films were produced in a hot blown film line.
In intermediate layer 2, three different non substantially resilient materials were used, based on three different fillers.
SNR1 is a 70% calcium carbonate compound (irregular shape).
SNR2 is a 15% silica based compound of spherical shape.
SNR3 is a 50% compound of lamellar shape.

Percentages were regulated in a way that the total weight % of filler is the same in all three samples, in order to compare the properties in a meaningful way.

### Comparative EXAMPLE 1

A 5 layer film is produced in a commercial hot blown film line with the following recipe

| | |
|---|---|
| Inner layer, 80% EAO1+ 15% SNR1+ 5% ADDITIVES | |
| Intermediate layer1 | 100%EAO1 |
| Intermediate layer2 | 80% EAO1+ 20% SNR1 |
| Intermediate layer3 | 100% EAO1 |
| Outer layer | PP1 |

### See table 1

The thickness (in µm) of the structure is 5/1.5/1.5/1.5/4 starting from the inner and going to the outer layer.

**TABLE 1**

| Type | Description | Density g/cm³ |
|---|---|---|
| EAO1 | Ethylene octene copolymer | 0.92 |
| SNR1 | Calcium carbonate compound | 1.6 |
| PP1 | Polypropylene copolymer | 0.9 |

The weight of the film is 12.77 g/m2.

### Comparative EXAMPLE 2

A 5 layer film is produced in a commercial hot blown film line with the following recipe

| | |
|---|---|
| Inner layer, 80% EAO1+ 15% SNR1+ 5% ADDITIVES | |
| Intermediate layer 1 | 100%EAO1 |
| Intermediate layer2 | 100%SNR2 |
| Intermediate layer3 | 100% EAO1 |
| Outer layer | PP1 |

The thickness of the structure is 5/1.5/1.6/1.5/3.9 starting from the inner and going to the outer layer.

The weight of the material is 12.95 g/m².

SNR2 is based on a silica based spherical shape filler.

The SNR2 is used in an amount so that the filler amount of the film is 2% by weight. This allows a direct comparison between the properties of films having the same filler content.

### EXAMPLE 3 as per the invention

A 5 layer film is produced in a commercial hot blown film line with the following recipe

| | |
|---|---|
| Inner layer, 80% EAO1+ 15% SNR1+ 5% ADDITIVES | |
| Intermediate layer1 | 100%EAO1 |
| Intermediate layer 2 | 50% EAO1+50% SNR3 |
| Intermediate layer 3 | 100% EAO 1 |
| Outer layer | PP1 |

The thickness of the structure is 5/1.5/1.6/1.5/3.9 starting from the inner and going to the outer layer.

The weight of the material is 12.95 g/m².

SNR3 is based on a lamellar filler.

The SNR3 is used in an amount so that the filler amount of the film is 2% by weight. This allows a direct comparison between the properties of films having the same filler content.

### TESTS

### 1. Compressibility testing as per below.

### COMPRESSIBILITY TESTING

30 meters of film from examples 1, 2, 3 were filled manually in a commercial cassette bought in a mothercare store.

It was noticed that it was not possible to fill manually more than 25 meters of the film of comparative example 1 and 22 meters of the film of comparative example 2. However, it was possible to fill in 30 meters of the film of example 3 into the cassette.

## Claims

1. Use of a multilayer film with a weight of less than 20g/m², comprising a layer comprising a polyolefin and a layer comprising a lamellar filler, for storing malodorous waste.

2. Use of claim 1 where the weight of the film is less than 15 g/m².

3. Use of claim 1 or 2 where the polyolefin is an ethylene alpha olefin copolymer.

4. Use of claim 1 or 2 where the polyolefin is a polypropylene.

5. Use of claim 1 or 2 where the lamellar filler has a largest dimension of less than 10 microns.

6. Use of claim 5 where the lamellar filler has a largest dimension of less than 3 microns.

7. Use of claim 5 where the lamellar filler has a largest dimension of less than 1 micron.

8. Use according to claim 1 wherein the film is initially stored in a cassette.

## Patentansprüche

1. Verwendung einer Mehrschichtfolie mit einem Gewicht von weniger als 20 g/m², umfassend eine Schicht, die ein Polyolefin umfasst, und eine Schicht, die einen lamellaren Füllstoff umfasst, zur Lagerung von übelriechendem Abfall.

2. Verwendung nach Anspruch 1, wobei das Gewicht der Folie weniger als 15 g/m2 beträgt.

3. Verwendung nach Anspruch 1 oder 2, wobei das Polyolefin ein Ethylen-Alpha-Olefin-Copolymer ist.

4. Verwendung nach Anspruch 1 oder 2, wobei es sich bei dem Polyolefin um ein Polypropylen handelt.

5. Verwendung nach Anspruch 1 oder 2, wobei der lamellare Füllstoff eine größte Abmessung von weniger als 10 Mikrometer hat.

6. Verwendung nach Anspruch 5, wobei der lamellare Füllstoff eine größte Abmessung von weniger als 3 Mikrometer hat.

7. Verwendung nach Anspruch 5, wobei der lamellare Füllstoff eine größte Abmessung von weniger als 1 Mikrometer hat.

8. Verwendung nach Anspruch 1, wobei der Film zunächst in einer Kassette gelagert wird.

## Revendications

1. Utilisation d'un film en couches multiples avec un poids inférieur à 20 g/m², comprenant une couche comprenant une polyoléfine et une couche comprenant une charge lamellaire, afin de stocker des déchets malodorants.

2. Utilisation selon la revendication 1, où le poids du film est inférieur à 15 g/m².

3. Utilisation selon la revendication 1 ou la revendication 2, où la polyoléfine est un copolymère éthylène-alpha oléfine.

4. Utilisation selon la revendication 1 ou la revendication 2, où la polyoléfine est un polypropylène.

5. Utilisation selon la revendication 1 ou la revendication 2, où la charge lamellaire a une dimension de plus grande taille inférieure à 10 microns.

6. Utilisation selon la revendication 5, où la charge lamellaire a une dimension de plus grande taille inférieure à 3 microns.

7. Utilisation selon la revendication 5, où la charge lamellaire a une dimension de plus grande taille inférieure à 1 micron.

8. Utilisation selon la revendication 1, dans laquelle le film est initialement stocké dans une cassette.
